# EUROPÄISCHE PATENTSCHRIFT

(11) **EP 0 636 083 B1**
(45) Veröffentlichungstag und Bekanntmachung des Hinweises auf die Patenterteilung: **22.01.1997**
(21) Anmeldenummer: 93911423.7
(22) Anmeldetag: 06.04.1993
(51) Int. Cl.: B62D 55/112, B62D 11/10

(54) **ABGEFEDERTES RAUPENSCHLEPPERFAHRGESTELL**
SPRING MOUNTED TRACKLAYING TRACTOR CHASSIS
CHASSIS DE TRACTEUR A CHENILLES MONTE SUR DES SUSPENSIONS

(30) Priorität: 06.04.1992 CS 1031/92
(43) Veröffentlichungstag der Anmeldung: 01.02.1995
(73) Patentinhaber: FERRAM, SPOL. S R.O., 746 01 Opava (CZ)
(72) Erfinder: URBANEK, Henrich, 036 01 Martin (SK); VRABEC Ján, 036 01 Martin (SK)
(74) Vertreter: Dusil, Vladimir, Dipl.-Ing.
(86) Internationale Anmeldenummer: CZ9300010
(87) Internationale Veröffentlichungsnummer: WO9319975

(56) Entgegenhaltungen:
- EP-A- 0 204 037
- DE-A- 3 832 529
- DE-C- 497 672
- FR-A- 1 514 404
- US-A- 4 582 367

## Beschreibung

Die Erfindung betrifft ein abgefedertes Raupenschlepperfahrgestell nach dem Oberbegriff des Patentanspruchs 1.

Es sind abgefederte Raupenfahrgestelle bekannt, bei denen abgefederte Laufräder an einem Rahmen angebracht sind. Auch dann, wenn beim Bau eines Raupenschleppers als Grundbauelement ein selbsttragender Körper verwendet wird, ist es notwendig, den Körper mit einem Rahmen zu versehen.

Ein Nachteil der vorgenannten Konstruktionen besteht darin, daß durch den Rahmen das Schleppergewicht wesentlich erhöht und der Zugang zum Körper beschränkt wird.

Aus der französischen Patentschrift 1.514.404 ist ein Raupenfahrgestell bekannt, das mit einem Paar von Tragarmen ausgestattet ist. Jeder Tragarm trägt ein Antriebsrad, ein Spannrad sowie mehrere Laufräder, wobei die Verbindung der Laufräder mit dem Tragarm mittels begrenzt drehbar gelagerter Schwinghebel erfolgt. Die Schwinghebel tragen dabei vorzugsweise Nutrollen, die sich an einem Seil abstützen, das einerseits am Tragarm und andererseits an einem gekrümmten Hebel befestigt ist, der auf der Spannradachse begrenzt schwenkbar gelagert ist. Durch das Zusammenwirken der Nutrollen mit dem Seil wird eine federnde Aufhängung der Laufräder erreicht.

Der Erfindung liegt daher die Aufgabe zugrunde, ein abgefedertes Raupenfahrgestell der eingangs genannten Art so auszubilden, daß das Fahrgestell direkt am Schlepperkörper so montiert werden kann, daß ein uneingeschränkter Zugang zum Schlepperkörper gewährleistet ist. Außerdem soll das Gesamtgewicht des Fahrzeuges reduziert werden.

Diese Aufgabe wird erfidungsgemäß dadurch gelöst,daß zwischen den Tragermen und den Schwinghebeln Primärfedern eingelegt sind und daß die Tragarme unter Zwischenschaltung von an einer am Schlepperkörper angebrachten Konsole befestigten Sekundärfedern beweglich gelagert sind, wobei jedes Antriebsrad von einem Kegelradgetriebe mittels eines Differentialplanetenreduziergetriebes mit einem mit dem Differentialplanetenreduziergetriebe zusammenwirkenden Portalgetriebe angetrieben wird, und wobei die Achse des Antriebsrads in bezug auf die Achse der Vorgelegewelle des Portalgetriebes sowie die Achse der Vorgelegewelle in bezug auf die Achse des Tellerrads des Kegeradgetriebes nach hinten sowie nach unten versetzt angeordnet sind. Durch diese Maßnahmen wird eine günstige Druckverteilung unter der Raupe erreicht.

Bei einer vorteilhaften Weiterbildung der Erfindung trägt die Spannradachse einen zweiarmigen Waagebalken, dessen Unterarm am Tragarm drehbar gelagert und dessen Oberarm mit einem am Tragarm angebrachten Spanner drehbar verbunden ist.

Bei einer weiteren vorteilhaften Ausgestaltung des erfindungsgemäßen Fahrgestells sind die Primärfeder und die Sekundärfeder balgförmige Luftfedern, deren Füllung von Stellungsreglern gesteuert wird. Die Steuerzüge der Stellungsregler sind mit Einrichtungen zur Längeneinstellung versehen, die mit einem Abfederungssteller in der Kabine verbunden sind.

Die Primärfeder des vorletzten Laufrads ist vorzugsweise mit der Primärfeder des letzten Laufrads über ein Reduktionsventil verbunden, dessen Betätigungsglied mit einem Stufenkolben gekuppelt ist. Der Stufenkolben verdichtet auf einer Seite eine Kammer, die mit der Primärfeder des letzten Laufrads verbunden ist, und auf der anderen Seite eine Doppelkammer, deren erster Teil mit der Primärfeder des vorletzten Laufrads und deren zweiter Teil mit dem Zylinder des Spanners verbunden ist.

Da erste Laufrad ist mit dem zweiten Laufrad mittelsd eines Verbindungsbalkens gekuppelt, der am Tragarm durch den Schwinghebel mit der Primärfeder befestigt ist. Die Primärfeder ist zwischen dem Schwinghebel und dem Tragarm einegelegt.

Zwischen dem Schwinghebel des letzten Laufrads und dem Tragarm ist ein Kompensationshydromotor angeordnet, der mit dem Zylinder des Spanners mittels einer einen Durchflußdämpfer enthaltenden Rohrleitung verbunden ist. Die Primärfedern des ersten und des zweiten Laufrads sind mittels einer Rohrleitung mit der Sekundärfeder verbunden.

Der Schwinghebel des letzten Laufrads ist mittels eines Primärstoßdämpfers mit dem Tragarm verbunden, während der Tragarm mittels eines Sekundärstoßdämpfers mit der am Schlepperkörper angebrachten Konsole verbunden ist.

In einer anderen vorteilhaften Ausgestaltung des erfindungsgemäßen Fahrgestells ist da Tellerrad des Kegelradgetriebes an einem rohrförmigen Träger gelagert, der durch einen äußeren genuteten Mitnehmer und einen inneren genuteten Mitnehmer mit einer Hohlwelle verbunden ist, an deren Enden Kronräder der Differentialplanetenreduziergetriebe angebracht sind. Eines der Differentialplanetenreduziergetriebe weist ein hohles Zentralrad auf, das mit einem hohlen Lenkantriebsrad gekuppelt ist. Im Hohlraum des Lenkantriebsrads, des hohlen Zentralrads und der Hohlwelle ist eine Zentralwelle gelagert, die das Zentralrad des anderen Differentialplanetenreduziergetriebes mit einem zweiten Lenkantriebsrad kuppelt.

Das hohle Lenkantriebsrad und das zweite Lenkantriebsrad können mittels eines gemeinsamen Kegelritzels in Eingriff stehen, das mit der Welle eines Lenkhydromotors gekuppelt ist.

Das hohle Lenkantriebsrad, das zweite Lenkantriebsrad und die Welle des Lenkhydromotors können im Lenkantriebsgehäuse gelagert werden, das am Gehäuse des Portalgetriebes an der Seite des mit dem hohlen Zentralrad versehenen Differentialplanetenreduziergetriebes angebracht ist .

Das Ritzel der Vorgelegewelle des Portalgetriebes ragt in den Hohlraum des Antriebsrads hinein, und das Gehäuse des Portalgetriebes geht in einen Tragzapfen über, an dem das Antriebsrad gelagert ist und an dessen Stirnseiten Ankerbolzen angebracht sind. Ein Reifen des Antriebsrads kann in einer Gabel des Tragarms in Lagerhülsen von Wälzlagern gelagert werden, die an den Ankerbolzen angebracht sind, und das Gehäuse des Portalgetriebes kann über die Gabel in den Hohlraum des Antriebsrads hineinragen.

Der Unterarm des zweiarmigen Waagebalkens ist am Tragarm mittels eines unteren Bolzens drehbar befestigt, desen Achse sich unterhalb und gleichzeitig vor der Spannradachse befindet.

Das am Ende des Tragarms gelagerte Spannrad ist durch die Sekundärfeder abgefedert. Der Tragarm schwingt in der vertikalen Ebene um die Achse des Antriebsrads, wobei die Länge der Raupe unverändert bleibt. Die Laufräder sind gegen den Tragarm abgefedert, und es besteht die Möglichkeit, ihre vertikale Lage zu verstellen. Wenn die abgefederten Laufräder in der unteren Lage sind, befindet sich das feste Triebrad in der erhobenen Lage über dem Boden. Dadurch ist eine Fahrt mit höheren Geschwindigkeiten möglich. Wenn dagegen die Laufräder erhoben sind, sinkt das Triebrad, und die Raupe unter dem Triebrad stützt sich auf Boden. Dadurch verlängert sich die Kontaktfläche der Raupe mit dem Boden und es erhöht sich die Stabilität des Schleppers gegen das durch Anbaugeräte und Bodenwiderstand in der Längsrichtung ausgeübte Kippmoment. So ist der Schlepper zum Einsatz bereit. Der Abfederungssteller in der Kabine betätigt die Stellungsregler der Feder und es ermöglicht, das Fahrgestell der schnellen Fahrt oder dem Arbeitseinsatz wahlweise anzupassen. Durch die gemeinsame Betätigung aller Stellungsregler wird die richtige Lage des Schleppers in jedem Einsatz gesichert.

Die Primärfeder des vorletzten Laufrads wird mit der Luft aus der Primärfeder des letzten Lauftrads über das Reduktionsventil gefüllt. Das hat eine Kompensation der Spannkraft in der Raupe bei der Fahrt mit erhobenem Spannrad zur Folge. Die Achslast hängt so nicht von der Spannkraft in der Raupe ab. Eine ähnliche Wirkung übt auch der Kompensationsmotor aus, der zwischen dem Schwinghebel des letzten Laufrads und dem Hauptarm eingelegt ist. Die hydraulische Verbindung des Kompensationshydromotors und des Spanners ermöglicht, die durch das Hineinschieben des letzten Laufrads ausgedruckte Flüssigkeit zum Hinausschieben des Triebrads auszunutzen.

Durch die vorgeschlagene Anordnung des rohrförmigen Tellerradträgers, der Hohlwelle und der Zentralwelle wird ermöglicht, das Kegelradgetriebe und die Bremsen vom ursprünglichen Radschlepperkörper zu übernehmen. Diese Anordnung erlaubt weiterhin, den Lenkhydromotor mit beiden Differentialplanetenreduziergetrieben zu verbinden, ohne den mittleren Abschnitt der Hinterachsbrücke des ursprünglichen Radschleppers umbauen zu müssen.

Das Lenkantriebsgehäuse stellt eine selbständige Baugruppe dar, die wahlweise am Gehäuse des Differenzialplanetenreduziergetriebes angebracht werden kann.

Die Anordnung des hohlen Lenkantriebrads und des zweiten Lenkantriebrads, die in Eingriff mit dem gemeinsamen Ritzel stehen, macht eine Ankupplung des Lenkhydromotors möglich, ohne Ansprüche auf Änderung des ursprünglichen Radschlepperkörpers zu stellen.

Das Portalgetriebe mit der Vorgelegewelle und dem Ausgangsgetriebe ist so ausgestaltet, daß die Achse des Triebrads in bezug auf die Achse der Vorgelegewelle in Richtung nach hinten und nach unten liegt, wobei auch die Achse der Vorgelegewelle in bezug auf die Achse des Tellerrads des Kegelgetriebes in Richtung nach hinten und nach unten liegt. Diese zweimalige Verschiebung nach hinten hat zur Folge, daß die Achse des Triebrads in einem wesentlichen Abstand nach hinten von der Achse des Tellerrads liegt, was ermöglicht,beim Umbau des Radschleppers am dessen Körper die ganze Dreipunktaufhängung und hydraulische Einrichtung ganz ohne Änderungen zu lassen. Wenn die Triebräder gesenkt sind, befindet sich die Dreipunktaufhängung des Schleppers im Bereich der Kontaktfläche der Raupe. Dadurch wird die Beständigkeit des Raupenschleppers gegen das Kippmoment von Anbaugeräte erhöht.

Im Anspruch 10 wird eine weitere Ausgestaltung der Erfindung beschrieben. Hierbei ragt das Gehäuse des Portalgetriebes mit dem Ritzel des Ausgangsgetriebes in den Hohlraum des Triebrads über die Gabel des Tragarmes hinein. Dadurch wird die Bodenfreiheit des Fahrzeugs erhöht und dessen Geländegängigkeit verbessert.

Die Erfindung gemäß der Ansprüche 1 bis 11 kann vorteilhaft beim Umbau eines Radschleppers in einen universellen Raupenschlepper verwendet werden, wobei die meisten Baugruppen des ursprünglichen Radschleppers erhalten bleiben. Es sind: Körper, Zubehör des Motors, Haube, Kabine, vordere und hintere Dreipunktaufhängung mit Hydraulik,vorderes und hinteres Gewicht. Im Vergleich mit bekannten Konstruktionen dieser Art werden bei beschriebener Bauweise des Fahrgestells die Zugkraft des Schleppers, seine Geschwindigkeit und Komfort des Fahrers erhöht,und die Aggregationsfähigkeit des Schleppers verbessert sich.

Die Erfindung ist in der Zeichnung anhand von Ausführungsbeispielen dargestellt. Es zeigen:

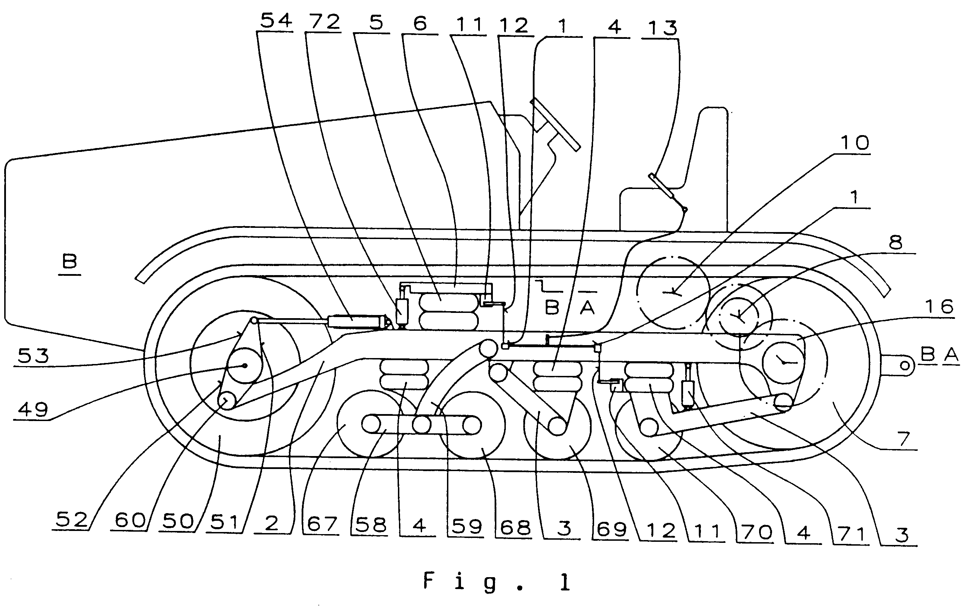

- Fig. 1: Fahrgestell, in dem das erste und das zweite Laufrad mittels eines Verbindungswaagebalkens gekuppelt sind (Seitenansicht),

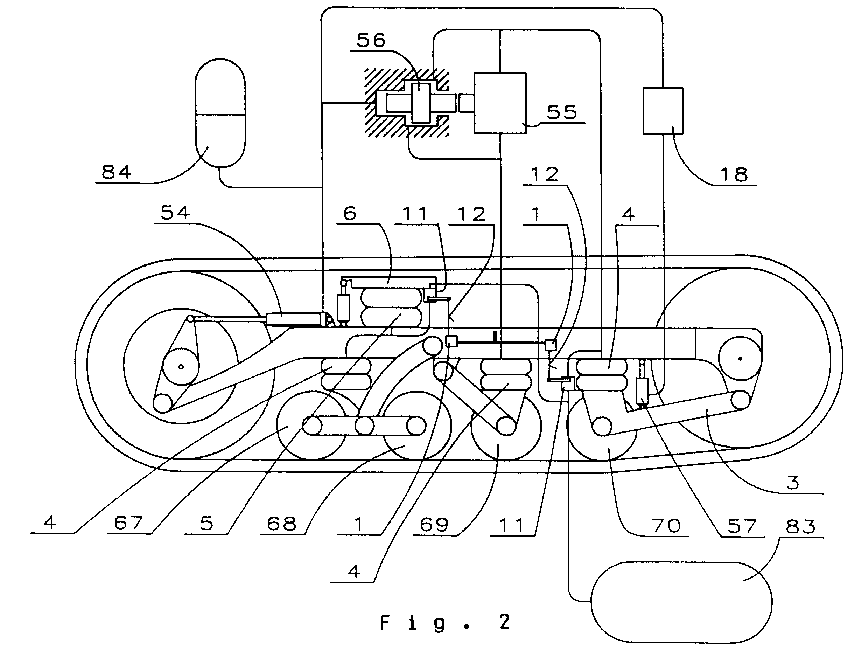

- Fig. 2: pneumatische Verbindung der Primärfeder über ein Reduktionsventil, Verbindung der Primär- und Sekundärfeder und Anschluß des Kompensationshydromotors,
- Fig. 3: schematische Darstellung des Antriebs von Triebrädern im Schnitt A - A in Fig. 1,
- Fig. 4: selbsttragenden Körper des Schleppers mit Portalgetriebe, Lenkantriebgehäuse und Raupenfahrgestell im Schnitt B - B nach Fig. 1,
- Fig. 5: Schnitt durch Spannrad und zweiarmigen Waagebalken mit dem festen Teil der Bremse,
- Fig. 6: Schnitt durch Spannrad und zweiarmigen Waagebalken mit dem festen Teil der Bremse, wobei über der Spannradsachse eine Konstruktionsvariante mit Scheibenbremse und unter der Spannradsachse eine andere Variante mit Trommelbremse dargestellt ist,
- Fig. 7: Schnitt durch alternative Konstruktion des Lenkantriebs mit einem Zwischenrad.

Im abgefederten Raupenfahrgestell trägt der Zapfen 49 des Spannrads 50 den zweiarmigen Waagebalken 51, dessen Unterarm 52 an dem Tragarm 2 mittels eines unteren Bolzens 60 drehbar gelagert ist und dessen Oberarm 53 mit einem am Tragarm 2 angebrachten Spanner 54 drehbar verbunden ist. Die Achse des unteren Bolzens 60 befindet sich unter und gleichzeitig vor der Achse des Spannradzapfens 49. Das vorletzte und das letzte Laufrad 69, 70 sind am Tragarm 2 mittels Schwinghebels 3 mit Primärfeder 4 befestigt,die zwischen dem Schwinghebel 3 und dem Tragarm 2 eingelegt ist. Das erste Laufrad 67 ist mit dem zweiten Laufrad 68 mittels eines Verbindungswaagebalkens 58 gekuppelt, der am Tragarm 2 durch den Schwinghebel 59 mit der Primärfeder 4 befestigt ist. Die Primärfeder 4 ist zwischen dem Schwingnebel 59 und dem Tragarm 2 eingelegt.Von oben ist auf den Tragarm 2 die Sekundärfeder 5 gestützt, die an einer am selbsttragenden Körper 82 des Schleppers angebrachten Konsole 6 befestigt ist.

Die Primärfeder 4 und die Sekundärfeder 5 sind balgförmige Luftfeder. Die Achse des Antriebrads 7 ist in bezug auf die Achse der Vorgelegewelle 8 des Portalgetriebes 9 in Richtung nach hinten und nach unten positioniert, sowie die Achse der Vorgelegewelle 8 in bezug auf die Achse des Tellerrads 10 des Kegelradgetriebes. Der Schwinghebel 3 des letzten Laufrads 70 ist mit dem Tragarm 2 mittels des Primärstoßdämpfers 71, und der Tragarm 2 ist mit der Konsole 6 mittels des Sekundärstoßdämpfers 72 verbunden.

Im Fahrgestell werden weiter die Primärfeder 4 des letzten Laufrads 70 und die Sekundärfeder 5 von einem Luftbehälter 83 über Stellungsregler 11 gefüllt, deren Steuerzüge 12 mit Einrichtungen 1 zur Längeneinstellung versehen sind, die mit einem Abfederungssteller 13 in der Kabine verbunden sind.

Die Primärfeder 4 des vorletzten Laufrads 69 ist mit der Primärfeder 4 des letzten Laufrads 70 über das Reduktionsventil 55 verbunden, dessen Betätigungsglied mit einem Stufenkolben 56 gekuppelt ist. Der Stufenkolben 56 verdichtet einerseits die Kammer, die mit der Primärfeder 4 des letzten Laufrads 70 verbunden ist,und andererseits die Doppelkammer, deren erster Teil mit der Primärfeder 4 des vorletzten Laufrads 69 und der zweite Teil mit dem Zylinder des Spanners 54 verbunden ist. Der Zylinder des Spanners 54 ist mit einer hydropneumatischen Feder 84 verbunden. Zwischen dem Schwinghebel 3 des letzten Laufrads 70 und dem Tragarm 2 ist der Kompensationshydromotor 57 eingelegt, der mit dem Zylinder des Spanners 54 mittels einer Rohrleitung mit einem eingeschalteten Durchflußdämpfer 18 verbunden ist. Die Primärfeder 4 des ersten und des zweiten Laufrads 67, 68 ist mittels einer Rohrleitung mit der Sekundärfeder 5 verbunden.

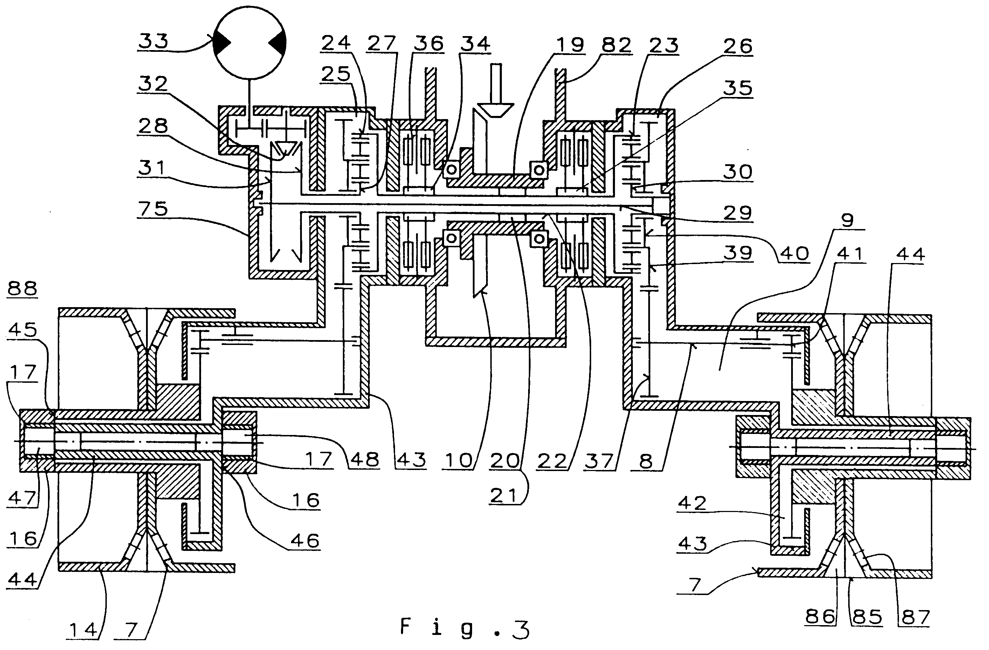

Im Fahrgestell nach Fig. 3 ist das Tellerrad 10 des Kegelradantriebs an dem rohrförmigen Träger 19 gelagert,der durch einen außeren genuteten Mitnehmer 21 und einen inneren genuteten Mitnehmer 20 mit der Hohlwelle 22 verbunden ist. An den Enden der Hohlwelle 22 sind Kronräder 23, 24 der Differentialplanetenreduziergetriebe 25, 26 angebracht. Eines der Differenzialplanetenreduziergetriebe 25 weist das hohle Zentralrad 27 auf, das mit einem hohlen Lenkantriebsrad 28 gekuppelt ist. Im Hohlraum des Lenkantriebsrads 28, des Zentralrads 27 und der Hohlwelle 22 ist die Zentralwelle 29 gelagert, die das Zentralrad 30 des anderen Differenzialplanetenreduziergetriebes 26 mit dem zweiten Lenkantriebsrad 31 kuppelt. Das hohle Lenkantriebsrad 28 und das zweite Lenkantriebsrad 31 stehen mittels des gemeinsamen Kegelritzels 32 in Eingriff. Das Kegelritzel 32 ist mit der Welle des Lenkhydromotors 33 gekuppelt. Das hohle Lenkantriebsrad 28, das zweite Lenkantriebsrad 31 und die Welle des Lenkhydromotors 33 sind im Lenkantriebsgehäuse 75 gelagert, das am Gehäuse des Portalgetriebes 9 an der Seite des mit dem hohlen Zentralrad 27 versehenen Differenzialplanetenreduziergetriebes 25 angebracht ist. Die Hohlwelle 22 ist mit Verzahnungen 34, 35 versehen,an denen Bremslamellen 36 eingeschoben sind.

Die Vorgelegewellen 8 der Portalgetriebe 9 stehen mittels der Eingansräder 37 mit den Zahnkränzen 39 in Eingriff. Die Zahnkränze 39 sind an den Umlaufradmitnehmern 40 der Differenzialplanetenreduziergetriebe 25, 26 befestigt. Die Vorgelegewellen 8 der Portalgetriebe 9 ragen mit Ritzeln 41 der Ausgangsgetriebe 42 in die Hohlräume der Antriebsräder 7 hinein. Das Gehäuse 43 des Portalgetriebes 9 läuft in einen Tragzapfen 44 aus, an dem das Antriebsrad 7 gelagert ist und an dessen Stirnseiten 45, 46 Ankerbolzen 47,48 angebracht sind. Das Antriebsrad ist mit Daumen 85 versehen, die in gleichmäßigen Abständen in einer Vertiefung 86 am Umfang des Antriebsrads 7 zwischen Reinigungsöffnungen 87 liegen.

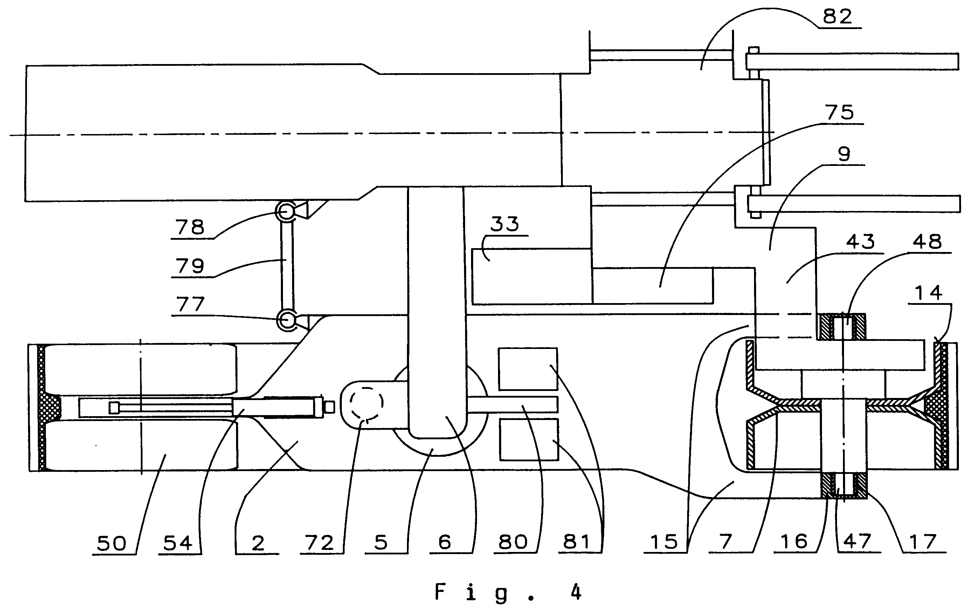

Im Fahrgestell nach Fig. 4 ist der Reifen 14 des Antriebsrads 7 in der Gabel 15 des Tragarms 2 in Lagerhülsen 16 der Walzenlager 17 gelagert, die an den Ankerbolzen 47, 48 angebracht sind. Das Gehäuse 43 des Portalgetriebes 9 ragt über der Gabel 15 in den Hohlraum des Antriebsrads 7 hinein. Am Tragarm 2 ist ein beweglicher Anker 77 angebracht, und am selbsttragenden Körper 82 des Schleppers ist ein fester Anker 78 angebracht. Beide Anker 77, 78 sind mit einer Strebe 79 verbunden. Die Strebe 79 kann durch eine Gleitplatte 80 ersetzt werden, die an der Konsole 6 befestigt ist und zwischen zwei vertikalen Leisten 81 eingelegt ist,die am Tragarm 2 befestigt sind.

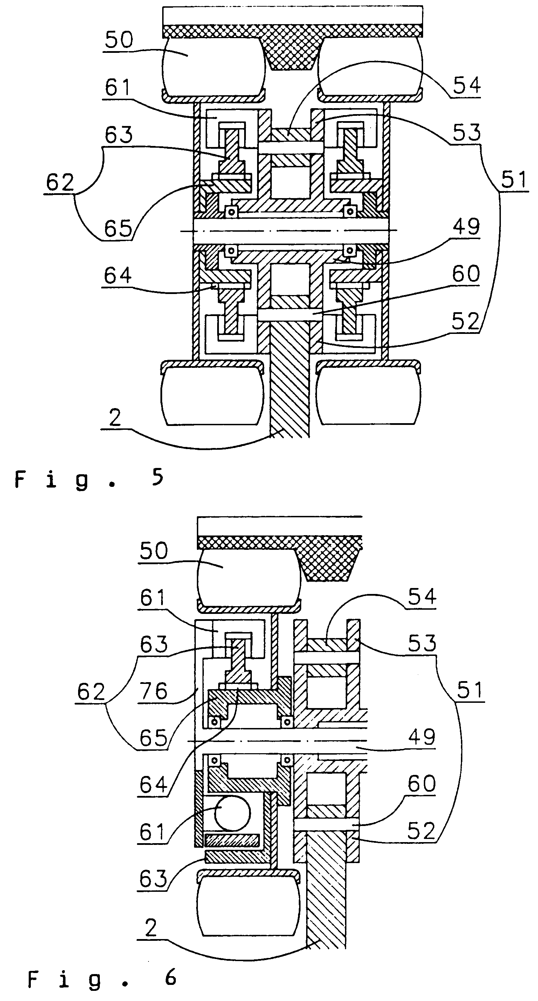

Im Fahrgestell nach Fig. 5 ist der feste Teil 61 der Bremse am zweiarmigen Waagebalken 51 befestigt, und der rotierende Teil 62 der Bremse ist mit dem Spannrad 50 verbunden. Mit dem Spannrad 50 ist eine Bremsnabe 65 verbunden,die an ihrem Umfang mit Nuten 64 versehen ist,die parallel zu der Achse des Spannrads 50 laufen. In den Nuten 64 ist die Nabe der Bremsscheibe 63 verschiebbar gelagert.

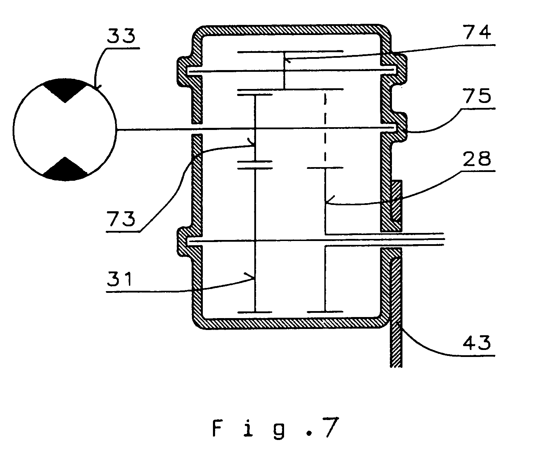

Die obere Hälfte der Fig. 6 stellt den festen Teil 61 der Bremse dar, der am zweiarmigen Waagebalken 51 mittels des Zapfens 49 des Spannrads 50 sowie mittels des Flansches 76 befestigt ist. Der rotierende Teil 62 der Bremse besteht aus der in den Nuten 64 verschiebbaren Scheibe 63. Die Nuten 64 sind an der Bremsnabe 65 gefräst,die mit dem Spannrad 50 gekuppelt ist. In der unteren Hälfte der Fig. 6 ist dagegen eine alternative Trommelbremse dargestellt.

Fig. 7 stellt eine alternative Konstruktion des Lenkantriebs 75 dar, in der das hohle Lenkantriebsrad 28 und das zweite Lenkantriebsrad 31 mit dem Ritzel 73 in Eingriff stehen, das mit der Welle des Lenkhydromotors 33 so gekuppelt ist, daß eines der Lenkantriebsräder 28, 31 in direktem Eingriff mit dem Ritzel 73 steht,und das andere mit dem Ritzel 73 mittels des Zwischenrads 74 in Eingriff steht.

## Patentansprüche

1. Abgefedertes Raupenschlepperfahrgestell, mit einem Paar von am Schlepperkörper (82) oder -rahmen gelagerten Tragarmen (2), wobei an jedem Tragarm (2) ein Antriebsrad (7), ein Spannrad (50) sowie Laufräder (67,68,69,70) angeordnet sind und wobei die Laufräder (67,68,69,70) am Tragarm (2) mittels federnd gelagerter Schwinghebel (3,59) befestigt sind, **dadurch gekennzeichnet,** daß zwischen den Tragermen (2) und den Schwinghebeln (3,59) Primärfedern (4) eingelegt sind und daß die Tragarme (2) unter Zwischenschaltung von an einer am Schlepperkörper (82) angebrachten Konsole (6) befestigten Sekundärfedern (5) beweglich gelagert sind, wobei jedes Antriebsrad (7) von einem Kegelradgetriebe mittels eines Differentialplanetenreduziergetriebes (25,26) mit einem mit dem Differentialplanetenreduziergetriebe (25,26) zusammenwirkenden Portalgetriebe (9) angetrieben wird, und wobei die Achse des Antriebsrads (7) in bezug auf die Achse der Vorgelegewelle (8) des Portalgetriebes (9) sowie die Achse der Vorgelegewelle (8) in bezug auf die Achse des Tellerrads (10) des Kegeradgetriebes nach hinten sowie nach unten versetzt angeordnet sind.

2. Fahrgestell nach Anspruch 1 **dadurch gekennzeichnet,** daß die Spannradachse (49) einen zweiarmigen Waagebalken (51) trägt, dessen Unterarm (52) am Tragarm (2) drehbar gelagert und dessen Oberarm (53) mit einem am Tragarm (2) angebrachten Spanner (54) drehbar verbunden ist.

3. Fahrgestell nach Anspruch 1, **dadurch gekennzeichnet,** daß die Primärfeder (4) und die Sekundärfeder (5) balgförmige Luftfedern sind, deren Füllung von Stellungsreglern (11) gesteuert wird, deren Steuerzüge (12) mit Einrichtungen (1) zur Längeneinstellung versehen sind, die mit einem Abfederungssteller (13) in der Kabine verbunden sind.

4. Fahrgestell nach Anspruch 2, **dadurch gekennzeichnet,** daß die Primärfeder (4) des vorletzten Laufrades (69) mit der Primärfeder (4) des letzten Laufrades (70) über ein Reduktionsventil (55) verbunden ist, dessen Betätigungsglied mit einem Stufenkolben (56) gekuppelt ist, der einerseits eine Kammer begrenzt, die mit der Primärfeder (4) des letzten Laufrades (70) verbunden ist, und andererseits eine Doppelkammer begrenzt, deren erster Teil mit der Primärfeder (4) des vorletzten Laufrades (69) und deren zweiter Teil mit dem Zylinder des Spanners 54) verbunden ist.

5. Fahrgestell nach Anspruch 1, **dadurch gekennzeichnet,** daß das erste Laufrad (67) mit dem zweiten Laufrad (68) mittels eines Verbindungsbalkens (58) gekuppelt ist, der am Tragarm (2) durch den Schwinghebel (59) mit der Primärfeder (4) befestigt ist.

6. Fahrgestell nach Anspruch 2, **dadurch gekennzeichnet,** daß zwischen dem Schwinghebel (3) des letzten Laufrades (70) und dem Tragarm (2) ein Kompensationshydromotor (57) angeordnet ist, der mit dem Zylinder des Spanners (54) mittels einer einen Durchflußdämpfer (18) enthaltenden Rohrleitung verbunden ist, daß die Primärfeder (4) des ersten und des zweiten Laufrades (67, 68) mittels einer Rohrleitung mit der Sekundärfeder (5) verbunden sind und daß der Schwinghebel (3) des letzten Laufrades (70) mittels eines Primärstoßdämpfers (71) mit dem Tragarm (2) , und der Tragarm (2) mittels eines Sekundärstoßdämpfers (72) mit der Konsole (6) , verbunden sind.

7. Fahrgestell nach Anspruch 1, **dadurch gekennzeichnet,** daß ein Tellerrad (10) des Kegelradgetriebes an einem rohrförmigen Träger (19) gelagert ist, der durch einen äußeren genuteten Mitnehmer (21) und einen inneren genuteten Mitnehmer (20) mit einer Hohlwelle (22) verbunden ist, an deren Enden Kronräder (23, 24) der Differentialplanetenreduziergetriebe (25, 26) angebracht sind.

8. Fahrgestell nach Anspruch 1, **dadurch gekennzeichnet,** daß eines der Differentialplanetenreduziergetriebe (25) ein hohles Zentralrad (27) aufweist, das mit einem hohlen Lenkantriebsrad (28) gekuppelt ist, wobei im Hohlraum des Lenkantriebsrades (28) , des hohlen Zentralrades (27) und der Hohlwelle (22) eine Zentralwelle (22) gelagert ist, die das Zentralrad (30) des anderen Differentialplanetenreduziergetriebes (26) mit einem zweiten Lenkantriebsrad (31) kuppelt, wobei das hohle Lenkantriebsrad (28) und das zweite Lenkantriebsrad (31) mittels eines gemeinsamen Kegelritzels (32) in Eingriff stehen, das mit der Welle eines Lenkhydromotors (33) gekuppelt ist.

9. Fahrgestell nach Anspruch 8, **dadurch gekennzeichnet,** daß das hohle Lenkantriebsrad (28) , das zweite Lenkantriebsrad (31) und die Welle des Lenkhydromotors (33) im Lenkantriebsgehäuse (75) gelagert sind, daß am Gehäuse (43) des Portalgetriebes (9) an der Seite des mit dem hohlen Zentralrad (27) versehenen Differentialplanetenreduziergetriebes (25) angebracht ist.

10. Fahrgestell nach Anspruch 1, **dadurch gekennzeichnet,** daß das Ritzel (41) der Vorgelegewelle (8) des Portalgetriebes (9) in den Hohlraum des Antriebsrades (7) hineinragt, daß das Gehäuse (43) des Portalgetriebes (9) in einen Tragzapfen (44) übergeht, an dem das Antriebsrad (7) gelagert ist und an dessen Stirnseiten (45, 46) Ankerbolzen (47, 48) angebracht sind, daß ein Reifen (14) des Antriebsrades (7) in einer Gabel (15) des Tragarmes (2) in Lagerhülsen (16) der Wälzlager (17) gelagert ist, die an den Ankerbolzen (47, 48) angebracht sind, und daß das Gehäuse (43) des Portalgetriebes (9) über die Gabel (15) in den Hohlraum des Antriebsrades (7) hineinragt.

11. Fahrgestell nach Anspruch 1, **dadurch gekennzeichnet,** daß der Unterarm (52) des zweiarmigen Waagebalkens (51) am Tragarm (2) mittels eines unteren Bolzens (60) befestigt ist, dessen Achse sich unterhalb und gleichzeitig vor der Spannradachse (49) befindet.

## Claims

1. Spring mounted tracked tractor chassis, provided with a pair of support arms (2) mounted rotatably on a body (82) or on a frame of the tractor, each support arm (2) being provided with a driving wheel (7), a tensioning wheel (50) and running wheels (67, 68, 69, 70), said running wheels being mounted on the support arm (2) by means of spring mounted rockers (3, 59), characterized in that primary springs (4) are inserted between the support arms (2) and the rockers (3, 59), and secondary springs (5) are mounted on brackets (6) of the tractor body (82), wherein the support arms (2) are mounted movably such that the secondary springs (5) lean against the support arms (2) ,wherein each driving wheel (7) is driven by a conical gearing by means of differential planetary reducers (25, 26) with a portal-type gearing (9) being in mesh with the differential planetary reducers (25, 26), wherein the axis of the driving wheel (7) is positioned to the rear and below the axis of countershaft (8) of the portal-type gearing (9) and the axis of the countershaft (8) is positioned to the rear and below the axis of ring gear (10) of the conical gearing.

2. Chassis as claimed in Claim 1, characterized in that the tensioning wheels (50) each have a journal (49) which carries a double arm balance beam (51),a lower arm (52) of the double arm balance beam (51) is mounted rotatably on the support arm (2), while an upper arm (53) of the double arm balance beam (51) is rotatably connected with a tension jack (54) mounted on the support arm (2).

3. Chassis as claimed in Claim 1, characterized in that the primary springs (4) and the secondary springs (5) are made in the form of air bellows, the filling of which is controlled by position controllers (11), and tie rods (12) of which are provided with length adjusting devices (1) connected to a spring mounting controller (13) located in a cab of the tractor.

4. Chassis as claimed in Claim 2, characterized in that the primary springs (4) of the second to last of the running wheels (69) are interconnected with the primary springs (4) of the last of the running wheels (70) via a pressure reducing valve (55), a control member of which is connected with a graded piston (56), said graded piston includes a chamber on one side thereof which is interconnected with the primary spring (4) of the last running wheel (70), and a double chamber on a second side thereof, a first part of which is interconnected with the primary spring (4) of the second to last of the running wheels (69), and a second part of which is interconnected with the cylinder of the tension jack (54).

5. Chassis as claimed in Claim 1, characterized in that the first of the running wheels (67) are connected with the second of the running wheels (68) by means of connecting rocker beams (58) which are mounted on the support arms (2) by means of rockers (59) having primary springs (4).

6. Chassis as claimed in Claim 2, characterized in that between the rocker beams (3) of the last of the running wheels (70) and the support arm (2), a compensating hydraulic motor (57), is interposed, which is interconnected with a cylinder of a tension jack (54) by piping including a flow damper (18), the primary springs (4) of both the first and the second of the running wheels (67, 68) are connected via a piping with the secondary spring (5) and a rocker (3) of the last of the running wheels (70) is connected, by means of a primary damper (71), with the support arm (2), which is connected by means of a secondary damper (72) with one of said brackets (6).

7. Chassis as claimed in Claim 1,characterized in that a ring gear (10) of the conical gearing is mounted on a tubular bracket (19),which is connected by an outer grooved driver (21) and by an inner grooved driver (20) with a hollow shaft (22), at the ends of which crown wheels (23, 24) of the differential planet reducers (25, 26) are mounted.

8. Chassis as claimed in Claim 1, characterized in that one of the differential planet reducers (25) has a hollow central wheel (27), which is connected to a hollow wheel (28) of a control drive, in a hollow of the hollow wheel (28), of the hollow central wheel (27) and of a hollow shaft (22) a central shaft (29) is mounted, the central shaft (29) connects a central wheel (30) of a second differential planet reducer (26) to a second wheel (31) of the control drive, said hollow wheel (28) of the control drive and said second wheel (31) of the control drive being in mesh by a common conical pinion (32), which is connected to a shaft of a hydraulic control motor (33).

9. Chassis as claimed in Claim 8, characterized in that the hollow wheel (28) of the control drive, the second wheel (31) of the control drive and the shaft of the hydraulic control motor (33) are mounted in a control drive housing (75), which is mounted on a casing (43) of the portal-type gearing (9) at the side of the differential planet reducer (25), which is provided with a hollow central wheel (27).

10. Chassis as claimed in Claim 1, characterized in that a pinion (41) of the countershaft (8) of the portal-type gearing (9) engages the hollow of the driving wheel (7), a casing (43) of the portal-type gearing (9) runs out into a supporting pin (44), on which the driving wheel (7) is mounted, and on face walls (45, 46) thereof armature pins (47, 48) are mounted, a tire (14) of the drive wheel (7) is mounted in a fork (15) of the support arm (2) in sleeves (16) of roller bearings (17), which are mounted on the armature pins (47, 48), and the casing (43) of the portal-type gearing (9) engages a hollow of the drive wheel (7) above the fork (15).

11. Chassis as claimed in Claim 1, characterized in that the lower arm (52) of the double armed balance beam (51) is mounted on the support arm (2) by means of a lower pin (60),an axis of which is situated below and behind an axis of a journal (49) of tensioning wheel (50).

## Revendications

1. Chassis à ressorts pour chenillards, muni par une paire de bras portants (2), montés pivotant sur le corps (82) ou sur le chassis du chenillard, chaque bras portant (2) étant muni d'une roue motrice (7), une roue de tension (50), et roues de translation (67, 68, 69, 70), les dernières étant attachées sur les bras portants (2) par balanciers (3, 59) à ressorts, **caracterisé en ce** que les ressorts primaires (4) sont montés entre les bras portants (2) et les balanciers (3, 59), les bras portants (2) étant montés mobilement ainsi,que les ressorts secondaires (5), montés sur des consoles, montées sur le corps (82) du chenillard, s'appuyent contre eux,chaque roue motrice (7) est commandée par une transmission conique, par intermediaire d'un réducteur différentiel planetaire (25, 26) avec une transmission à portique (9), qui est en engrènement avec le réducteur différentiel planetaire (25, 26), l'axe de la roue motrice (7) étant située envue de l'axe de l'arbre secondaire (8) de la transmission à portique (9) en arrière et vers le bas, de meme que l'axe de l'arbre secondaire en vue de l'axe de la roue d'angle (10) de la transmission conique.

2. Chassis selon la revendication 1, caracterisé en ce que la fusée (49) de la roue de tension (50) porte un balancier à deux bras (51), le bras inférieur (52) duquel est monté tournant sur le bras portant (2), et le bras supérieur (53) est relié pivotant avec un tendeur (54), monté sur le bras portant (2).

3. Chassis selon la revendication 1, caracterisé en ce que les ressorts primaires (4), bien que les ressorts secondaires (5) sont réalisés comme soufflets d'air, l'alimentation desquels étant commandée par régulateurs de position (11),les tiges (12) desquels étant munies avec dispositifs (1) pour l'ajustement de la longueur, qui sont unis avec l'organe d'ajustement (13) de la position, monté dans la cabine du chenillard.

4. Chassis selon la revendication 3, caracterisé en ce que les ressorts primaires (4) de l'avant-dernière roue motrice (69) sont conjuguées avec les ressorts primaires (4) de la dernière roue motrice (70) par une soupape de réduction (55), l'élément de commande de laquelle est conjugué avec un piston gradué (56) qui, à une côté ferme la chambre conjugée avec le ressort primaire (4) de la dernière roue motrice (70) et, à l'autre côté ferme la chambre double, la première part de la quelle est conjuguée avec le ressort primaire (4) de l'avant-dernière roue motrice (69), et, l'autre part avec le cylindre du tendeur (54).

5. Chassis selon la revendication 1, caracterisé en ce que la première roue motrice (67) est conjuguée avec la seconde roue motrice (68) par un balancier de liaison (58), qui est monté sur le bras portant (2) par un balancier (59) avec un ressort primaire (4).

6. Chassis selon la revendication 1, caracterisé en ce qu'entre le balancier (3) de la dernière roue motrice (70) et le bras portant (2) est interposé un hydromoteur-compensateur (57,qui est conjugué avec le cylindre du tendeur (54) par un conduit impliquant un ammortiseur (18) de passage, les ressorts primaires (4) de la première et la deuxième roue motrice (67, 68) sont conjugués par le conduit avec le ressort secondaire (5) et le balancier (3) de la roue motrice dernière (70) est conjugué par intermédiaire de l'ammortisseur primaire (71) avec le bras portant (2), et le bras portant (2) conjugué par intermédiaire d'ammortisseur secondaire (72) avec la console (6).

7. Chassis selon la revendication 1, caracterisé en ce que la roue d'angle (10) de la transmission conique est posée sur un porteur tubulaire (19), qui est conjugué avec un entraineur rainuré extérieur (21) et un entraineur rainuré intérieur (20) avec l'arbre creux (22), aux extrémités de qui sont attachées les roues (23, 24) des réducteurs planétaires différentiels.

8. Chassis selon la revendication 1, caracterisé en ce qu'un des réducteurs planétaires différentiels (25) a une roue centrale creuse (27) qui est conjuguée avec la roue creuse (28) de la commande de guidage, et dans les cavités de la roue (28) de la commande de guidage,de la roue centrale creuse (27) et l'arbre creux (22) est monté un arbre central (29), qui relie la roue centrale (30) du deuxième réducteur différentiel planétaire (26) avec la deuxième roue (31) de la commande de guidage, la roue creuse (28) de la commande de guidage et la deuxième roue (31) de la commande de guidage sont en engrènement par intermediaire d'un pignon conique commun (32), qui est uni avec l'arbre du hydromoteur (33) du guidage.

9. Chassis selon la revendication 9, caracterisé en ce que la roue creuse (28) de la commande de guidage, la deuxième roue (31) de la commande de guidage, et l'arbre du hydromoteur (33) du guidage sont logés dans l'armoire (75) de la commande de guidage, qui est attachée sur l'armoire (43) de la transmission à portique (9) du côté du réducteur planétaire différentiel (25), muni d'une roue centrale creuse (27).

10. Chassis selon la revendication 1, caracterisé en ce que le pignon (41) de l'arbre secondaire (8) de la transmission à portique (9) engage la cavité de la roue motrice (7), l'armoire (43) de la transmission à portique (9) passe dans le boulon porteur (44), sur lequel est monté la roue motrice (7), et sur ses panneaux frontaux (45, 46) sont fixés les tourillons d'ancrage (47, 48), le bandage (14) de la roue motrice (7) est monté dans la fourchette (15) du bras portant (2) dans les manchons (16) des roulements à rouleaux (17), qui sont montés sur les tourillons d'ancrage (47, 48), l'armoire (43) de la transmission à portique engage la cavité de la roue motrice (7) au-dessus de la fourchette (15).

11. Chassis selon la revendication 1, caracterisé en ce que le bras inférieur (52) du balancier à deux bras (51) est monté sur le bras portant (2) par un pivot inférieur (60), l'axe duquel est situé dessous et à la fois devant l'axe du pivot (49) de la roue de tension (50).
